# EUROPEAN PATENT SPECIFICATION

(11) **EP 1 666 759 B1**
(45) Date of publication and mention of the grant of the patent: **20.07.2011**
(21) Application number: 04788116.4
(22) Date of filing: 24.09.2004
(51) Int. Cl.: F16F 3/12, F16F 15/04, B60C 1/00, B60C 9/00, B32B 15/06, D07B 1/06

(54) **VIBRATION ABSORBING ALLOY MEMBER, AND RUBBER VIBRATION ISOLATOR, FLOOR VIBRATION DAMPING APPARATUS, TIRE, STEEL CORD AND RUBBER SEISMIC ISOLATIOR USING THE SAME**
VIBRATIONSABSORBIERENDES LEGIERUNGSTEIL UND GUMMIVIBRATIONSISOLATOR, BODENVIBRATIONSDÄMPFER, REIFEN, STAHLDRAHT UND SEISMISCHER ISOLATOR, DIE DIESES LEGIERUNGSTEIL BENUTZEN
ELEMENT D'ALLIAGE D'ABSORPTION DE VIBRATIONS, ET ISOLATEUR DE VIBRATION EN CAOUTCHOUC, APPAREIL AMORTISSEUR DE VIBRATIONS DE SOL, PNEUMATIQUE, CABLE D'ACIER ET ISOLATEUR SISMIQUE EN CAOUTCHOUC UTILISANT UN TEL ELEMENT

(30) Priority: 24.09.2003 JP 2003331570; 02.12.2003 JP 2003402802; 21.01.2004 JP 2004012817; 04.03.2004 JP 2004060874
(43) Date of publication of application: 07.06.2006
(73) Proprietor: Bridgestone Corporation, Tokyo 104-8340 (JP)
(72) Inventor: KIKUCHI, Masami, c/o Bridgestone Corporation, Kodaira-shi,Tokyo 1878531 (JP); YOKOI, Takashi, c/o Bridgestone Corporation, Kodaira-shi, Tokyo 1878531 (JP); SHIZUKU, Takahisa, c/o Bridgestone Corporation, Kodaira-shi, Tokyo 1878531 (JP); AIZAWA, Satoshi, c/o Bridgestone Corporation, Kodaira-shi, Tokyo 1878531 (JP); MURAKAMI, Kazutomo, c/o Bridgestone Corporation, Kodaira-shi, Tokyo 1878531 (JP); UEDA, Hiroyuki, c/o Bridgestone Corporation, Kodaira-shi, Tokyo 1878531 (JP); SUZUKI, Shigenobu, c/o Bridgestone Corporation, Yokohama-shi, Kanagawa 2448510 (JP)
(74) Representative: Whalley, Kevin
(86) International application number: PCT/JP2004/013957
(87) International publication number: WO 2005/028910

(56) References cited:
- JP-A- 2 190 633
- JP-A- 11 303 918
- JP-A- 2002 081 499
- JP-A- 2002 146 498
- JP-A- 2002 161 490
- JP-A- 2003 226 951
- JP-B2- 2 849 698
- JP-B2- 38 008 002
- JP-U- 7 008 681
- JP-U- 59 007 938
- JP-U- 60 073 941
- JP-U- 62 140 152
- JP-U- 63 196 244
- US-A- 5 348 701

## Description

The present invention relates to a damping alloy member having a function of reducing vibration and noise during driving and moving, and a rubber vibration isolator, a floor vibration damping apparatus, a tire, a steel cord and a quake-absorbing rubber using the same.

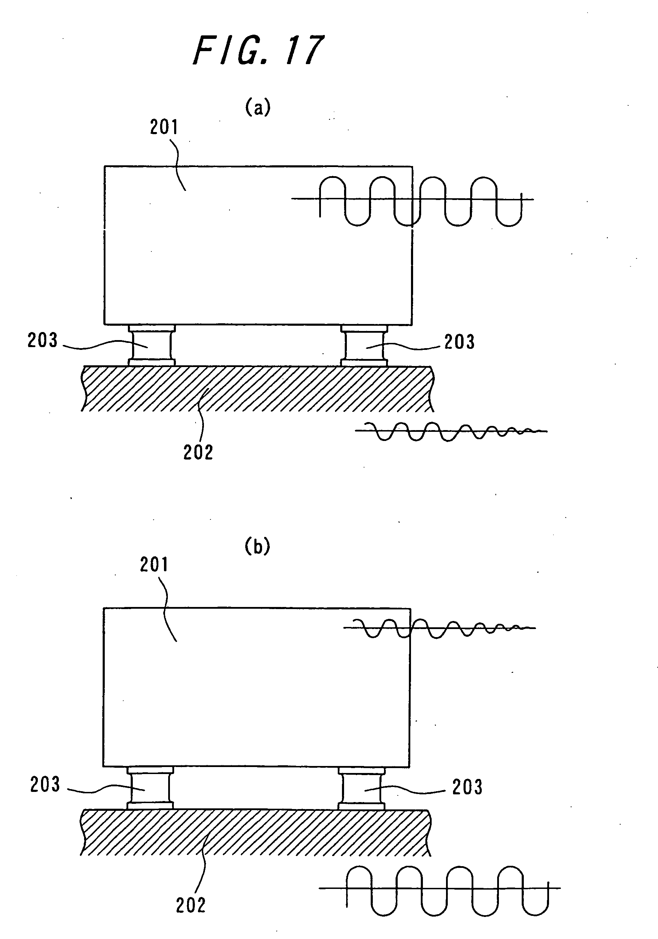

Heretofore, in order to reduce vibration and noise during driving and moving, a damping member is used in various technical fields. As one example, in the case that a vibration generated by an operation of a machine 201 is not transferred to a basement 202 as shown in Fig. 17a, or, in the case that a vibration generated at the basement 202 is not transferred to the machine as shown in Fig. 17b, a rubber vibration isolator 203 is arranged between the machine 201 and the basement 202 (Web site of BRIDGESTONE CORPORATION / theory of rubber vibration isolator [searched on 2003/9/17], internet, URL://www.bridgestone-dp.ip/dp/ip/do/bousin/dg/dg 2.html.) The reason for using the rubber vibration isolator 203 in such applications is that one components have a simple and compact structure and one component can be used as a spring for three directions and that a vibration at a resonance state is small as compared with a metal spring.

The damping member having the structure mentioned above has, up to now, a function for reducing vibration and noise sufficiently. However, recently there is an increased requirement for developing a damping member having further high performance. Moreover, in a rubber vibration isolator, a floor vibration damping apparatus, a tire, a steel cord and so on, a requirement for further reducing vibration and noise is increased.

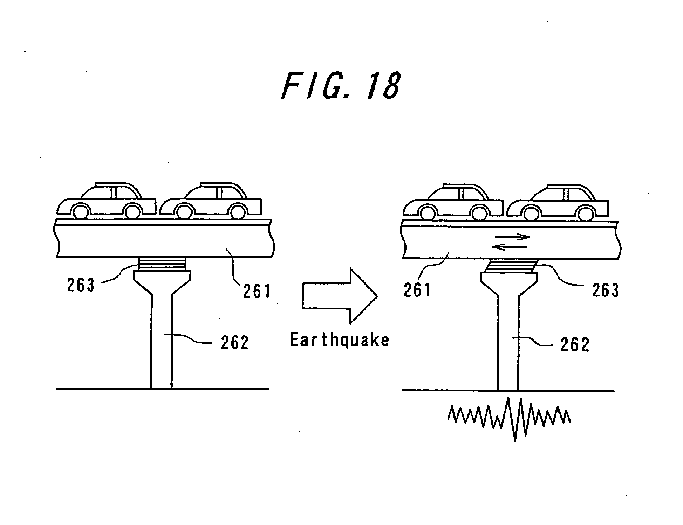

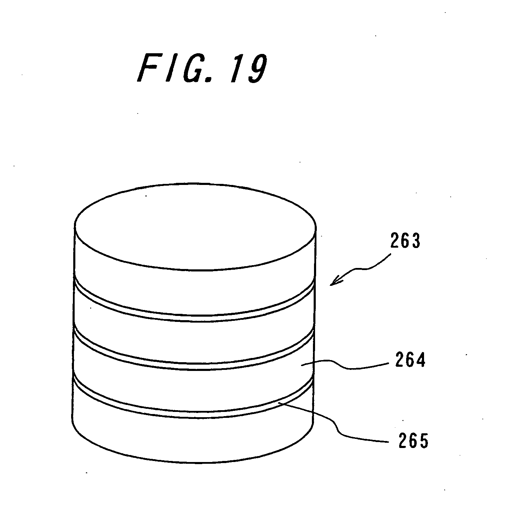

In addition, a quake-absorbing equipment for a bridge construction is known, which is used for improving safety of a construction member such as a road bridge by absorbing energy at an earthquake occurring. As one example, as shown in Fig. 18, a quake-absorbing rubber system is known, in which a quake-absorbing equipment 263 is arranged between a road 261 and a road bridge 262 for supporting the road 261 and in which energy of an earthquake is absorbed by deforming in a horizontal direction (Web site of BRIDGESTONE CORPORATION / high damping quake-absorbing rubber support (HDR) [searched on 2003/10/8], internet URL://www.bridgestone-
dp.jn/dp/ip/road/shishozai/shishozai07.html). Normally, the quake-absorbing equipment 263 mentioned above has a construction such that a laminated rubber having an integral structure in which a high damping rubber sheet 264 and a metal plate 265 are alternately laminated is used as a main member as shown in Fig. 19.

The laminated rubber having the structure mentioned above has three elements such as a load supporting performance, a resilience (spring) and a damping force, which are required for the quake-absorbing equipment 263. However, recently, there is an increased requirement for developing a quake-absorbing rubber having a further damping force.

Attention is also drawn to JP-2002 -146498A, which discloses a damping alloy member consisting of a damping alloy using MN as a base.

An object of the invention is to eliminate the drawbacks mentioned above and to provide a damping alloy member having a function for reducing high vibration and noise, and a rubber vibration isolator, a floor vibration damping apparatus, a tire and a steel cord using the same, and to further provide a quake-absorbing rubber which can cease a continuous vibration by means of a high damping efficiency and which can achieve a high damping performance as compared with a known quake-absorbing rubber.

According to the invention, a damping alloy member consists of a twin crystal type damping alloy made of Cu-Al-Mn alloy, Mg-Zr alloy, Mn-Cu alloy, Mn-Cu-Ni-Fe alloy, Cu-Al-Ni alloy, Ti-Ni alloy, Al-Zn alloy, Cu-Zn-Al alloy, Mg alloy, Cu-Si alloy, Fe-Mn-Si alloy, Fe-Ni-Co-Ti alloy, Fe-Ni-C alloy, Fe-Cr-Ni-Mn-Si-Co alloy and Ni-Al alloy, and has a shape of a flake, a wire or a spring for optimizing a deformation of the alloy.

Moreover, according to a preferred example using the damping alloy member of the invention, a floor vibration damping apparatus consists of a composite material in which a rubber and the damping alloy member mentioned above are compounded. Further, according to a further preferred example, the damping alloy member has a spring structure such that a plurality of springs, having different spring constants in a height direction, are combined and used in such a manner that: a vibration under a low loading state is absorbed by a spring having a low spring constant; and a vibration under a high loading state is absorbed by a spring having a high spring constant, while the spring having a low spring constant is contacted to a cap.

Moreover, according to a preferred example using the damping alloy member of the invention, a tire has the damping alloy member mentioned above embedded in the tire so as to reduce an impact applied to a moving tire from a road surface and to decrease vibration and noise. Further, according to a further preferred example, a damping alloy member having a flake shape is used.

Moreover, according to a preferred example using the damping alloy member of the invention, a steel cord has a structure such that the damping alloy member mentioned above is inserted into an inner portion and an outer portion of the steel cord. Further, according to a further preferred example, a damping alloy member having a wire shape or a crimped wire shape is used, so that a deformation of the steel cord is easily transferred to the damping alloy member; and a tire consisting of the steel cord mentioned above, is such that, in the case such that the steel cord is deformed by an impact applied to a moving tire from a road surface, vibration and noise are reduced by the damping alloy member.

Moreover, according to a preferred example using the damping alloy member of the invention, a first aspect of a quake-absorbing rubber is such that a damper member, in which a rubber and a damper made of the damping alloy member mentioned above are compounded, is combined with a laminated rubber having an integral structure obtained by laminating alternately a high damping rubber sheet and a metal plate.

Moreover, according to a preferred example using the damping alloy member of the invention, a second aspect of a quake-absorbing rubber is such that a damper having a spring shape made of the damping alloy member mentioned above is wound around an outer portion of a laminated rubber having an integral structure obtained by laminating alternately a high damping rubber sheet and a metal plate, and, the laminated rubber and the damper are combined with each other.

Further, according to preferred examples of the first aspect of the quake-absorbing rubber mentioned above, the damper member is arranged at a center portion of the laminated rubber; the damper has a flake shape; and the damper is mixed in the high damping rubber sheet of the laminated rubber. Furthermore, according to a preferred example of the second aspect of the quake-absorbing rubber mentioned above, a periphery of the damper having a spring shape is covered with an elastic member.

The invention will be further described with reference to the accompanying drawings, wherein:
Figs. 1a - 1f are schematic views respectively explaining one example of a damping alloy member according to the invention.
Figs. 2a and 2b are schematic views respectively showing one embodiment of a rubber vibration isolator using the damping alloy member according to the invention.
Figs. 3a and 3b are schematic views respectively explaining one example of a main portion of the rubber vibration isolator using the damping alloy member according to the invention.
Figs. 4a and 4b are schematic views respectively explaining another example of a main portion of the rubber vibration isolator using the damping alloy member according to the invention.
Fig. 5 is a schematic view explaining still another example of a main portion of the rubber vibration isolator using the damping alloy member according to the invention.
Fig. 6 is a schematic view explaining still another example of a main portion of the rubber vibration isolator using the damping alloy member according to the invention.
Fig. 7 is a schematic view explaining one example of a vibration damping member of a floor vibration damping apparatus using the damping alloy member according to the invention.
Fig. 8 is a schematic view explaining another example of the vibration damping member of the floor vibration damping apparatus using the damping alloy member according to the invention.
Figs. 9a and 9b are schematic views respectively explaining one example in which the floor vibration damping apparatus is constructed by using the vibration damping members shown in Figs. 7 and 8.
Fig. 10 is a schematic view explaining one example of a tire using the damping alloy member according to the invention.
Figs. 11a - 11c are schematic views respectively explaining one example of a steel cord using the damping alloy member according to the invention.
Fig. 12 is a schematic view showing one embodiment of a first aspect of a quake-absorbing rubber using the damping alloy member according to the invention.
Figs. 13a and 13b are schematic views respectively explaining one example of a damper member of the first aspect of the quake-absorbing rubber using the damping alloy member according to the invention.
Figs. 14a and 14b are schematic views respectively explaining one example of a damper member of the first aspect of the quake-absorbing rubber using the damping alloy member according to the invention.
Fig. 15 is a schematic showing another embodiment of the first aspect of the quake-absorbing rubber using the damping alloy member according to the invention.
Fig. 16 is a schematic view showing one embodiment of a second aspect of the quake-absorbing rubber using the damping alloy member according to the invention.
Figs. 17a and 17b are schematic views respectively explaining the theory of a rubber vibration isolator.
Fig. 18 is a schematic view explaining the theory of a quake-absorbing rubber.
Fig. 19 is a schematic view showing one embodiment of a laminated rubber according to a known example.

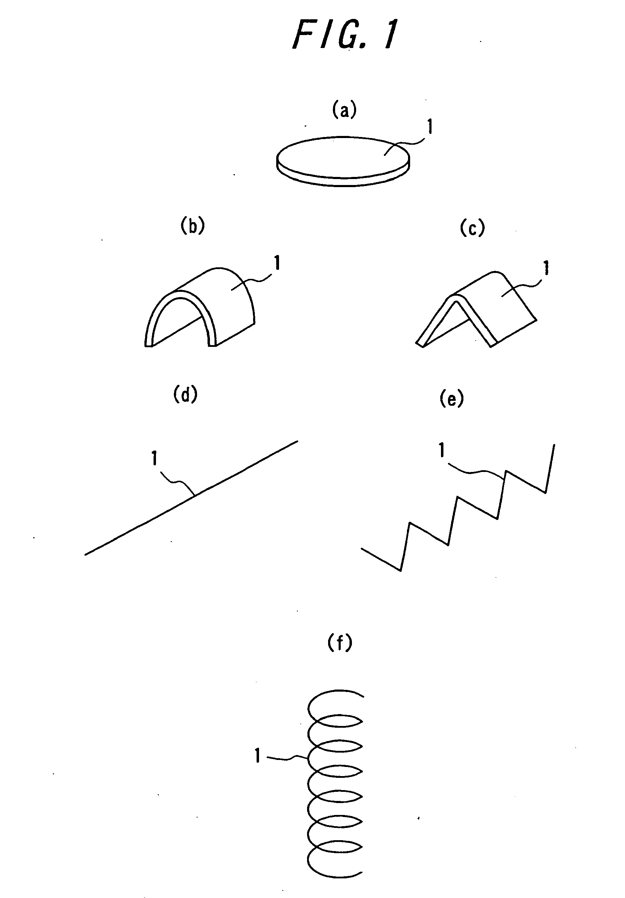

Figs. 1a - 1f are schematic views respectively explaining one example of a damping alloy member according to the invention. In the damping alloy member according to the invention, in order to reduce vibration and noise from a viewpoint of shape, the shapes of a damping alloy member 1 are: a simple flake shape as shown in Fig. 1a; a flake shape having a U-shaped longitudinal cross section as shown in Fig. 1b; a flake shape having a V-shaped longitudinal cross section as shown in Fig. 1c; a linear wire shape as shown in Fig. 1d; a crimped wire shape as shown in Fig. 1e; and a spring shape as shown in Fig. 1f. Moreover, as the damping alloy of a twin crystal type, use is made of Cu-Al-Mn alloy, Mg-Zr alloy, Mn-Cu alloy, Mn-Cu-Ni-Fe alloy, Cu-Al-Ni alloy, Ti-Ni alloy, Al-Zn alloy, Cu-Zn-Al alloy, Mg alloy, Cu-Si alloy, Fe-Mn-Si alloy, Fe-Ni-Co-Ti alloy, Fe-Ni-C alloy, Fe-Cr-Ni-Mn-Si-Co alloy or Ni-Al alloy.

In the damping alloy member 1 having the shape and material mentioned above, it is possible to reduce the vibration and the noise from a viewpoint of shape in addition to a damping property of the alloy, so that a damping alloy member having a function of reducing high vibration and noise can be obtained and also a rubber vibration isolator, a floor vibration damping apparatus, a tire and a steel cord, using the damping alloy member can be obtained. Hereinafter, the rubber vibration isolator, the floor vibration damping apparatus, the tire and the steel cord, which use the damping alloy member 1, will be explained in this order.

### <As to the rubber vibration isolator>

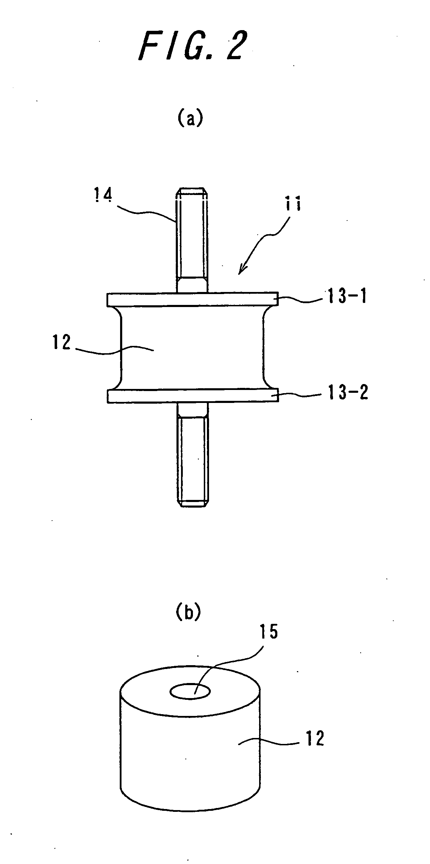

Figs. 2a and 2b are schematic views respectively showing one embodiment of a rubber vibration isolator using the damping alloy member according to the invention. In the example shown in Fig. 2a, a rubber vibration isolator 11 has a construction such that a main member 12 of the rubber vibration isolator is fixed by: plate members 13-1 and 13-2, which are made of a metal and arranged at both ends thereof; and a shaft member 14, which is made of a metal and penetrates through a center portion thereof. Therefore, as shown in Fig. 2b, a through hole 15 for passing the shaft member 14 is arranged at a center portion of the main member 12 of the rubber vibration isolator. In the case such that the rubber vibration isolator 11 having the construction mentioned above is assembled actually to a machine and so on, it is preferably arranged in such a manner that moving directions due to vibration and so on are a direction along the shaft member 14 and a direction along planes of the plate members 13-1, 13-2 perpendicular to the direction along the shaft member 14.

A feature of the rubber vibration isolator 11 mentioned above lies in the improvement of the main member 12 of the rubber vibration isolator which is constructed by compounding a damper made of the damping alloy member 1 mentioned above with a normal rubber. Hereinafter, the rubber vibration isolator 11 using the damping alloy member 1 according to the invention will be explained in detail.

In the rubber vibration isolator 11 using the damping alloy member 1 according to the invention, the damping alloy member 1 is used as the damper included in the main member 12 of the rubber vibration isolator. As the rubber vibration isolator 11, it is preferred to use Cu-Al-Mn alloy, Mg-Zr alloy, Mn-Cu alloy, Mn-Cu-Ni-Fe alloy, Cu-Al-Ni alloy, Ti-Ni alloy, Al-Zn alloy, Cu-Zn-Al alloy, or Mg alloy, and it is most preferred to use Cu-Al-Mn alloy. In this case, the reason for using the damping alloy of a twin crystal type is as follows. That is to say, a martensite twin crystal structure according to this embodiment is easily deformed by an external input, and, at that time, an energy loss due to hysteresis is generated. This is because the martensite twin crystal is not broken by fatigue, since it is not a material in which a dislocation is not generated by plastic deformation, and only a positional relation of atoms are changed. Moreover, among them, the reason for preferably using the alloy of Cy series is that it is firmly connected to S existing in a rubber by a curing reaction.

Moreover, in the rubber vibration isolator 11 using the damping alloy member 1 according to the invention, as a shape of the damper included in the main member 12 of the rubber vibration isolator, there is used a flake shape, a wire shape, or a spring shape, since a shape of the damping alloy can be optimized. Here, the reason for using these shapes is that a damping effect of the damper can be easily obtained.

Further, in the rubber vibration isolator 11 using the damping alloy member 1 according to the invention, as a rubber material consisting of a main construction member of the main member 12 of the rubber vibration isolator, it is possible to use any rubber used for conventional rubber vibration isolators. Specifically, as one example, it is preferred to use a natural rubber, a styrene rubber, a nitrile rubber, a chloroprene rubber and a butyl rubber.

Furthermore, in the rubber vibration isolator 11 using the damping alloy member 1 according to the invention, a compounding rate between the damper and the rubber is not particularly limited. The compounding rate can be determined suitably so as to obtain most suitable damping properties as the rubber vibration isolator II having the main member 12 in which the damper and the rubber are compounded. Normally, it is preferred to set the compounding rate such as damper: 1 - 50 vol % and rubber: remainder. Here, if an amount of the damper is less than 1 vol %, a contribution rate of the alloy is small. On the other hand if an amount of the damper exceeds 50 vol % a mixing resistance during the manufacturing becomes too large and thus the manufacturing may not be possible.

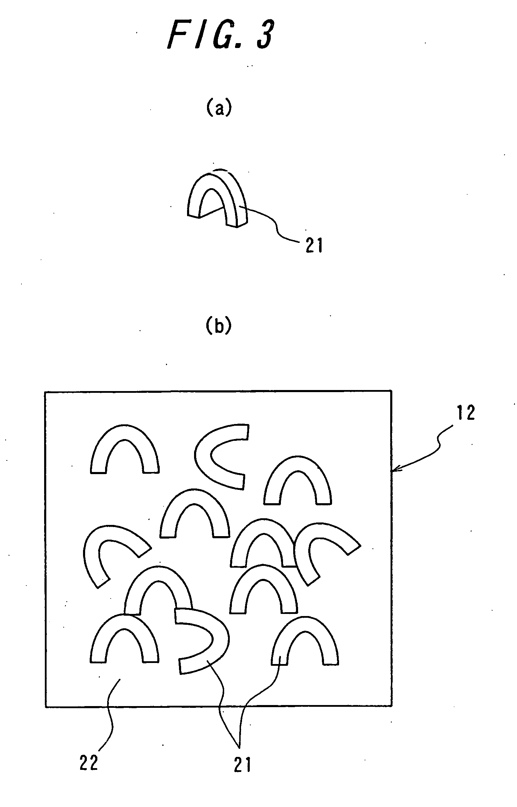

Figs. 3a and 3b are schematic views respectively explaining one example of a main portion of the rubber vibration isolator using the damping alloy member according to the invention. In this example, use is made of a damper 21 made of the twin crystal type damping alloy member 1 and having a flake shape with a U-shaped longitudinal cross section as shown in Fig. 3a. A plurality of dampers 21 are randomly mixed and compounded in a rubber 22, so that the main member 12 of the rubber vibration isolator is constructed as shown in Fig. 3b. In this example, since, in addition to a damping performance based on an elastic deformation of the rubber 22, a damping performance is based on a deformation of twin crystal of the damper 21 made of the damping alloy of twin crystal type, it is possible to obtain a high damping performance as compared with a rubber vibration isolator made of conventional rubber only.

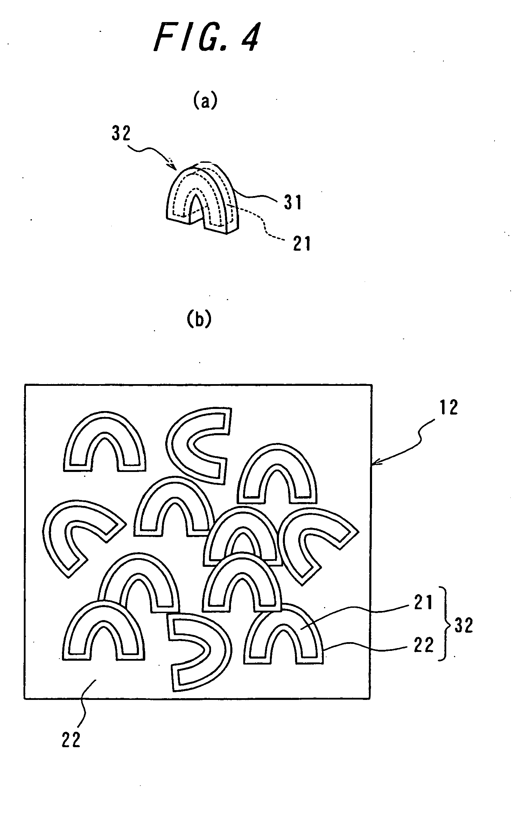

Figs. 4a and 4b are schematic views respectively explaining another example of a main portion of the rubber vibration isolator using the damping alloy member according to the invention. In this example, use is made of a damper 32 having a structure such that an intermediate layer 31 made of a material having an intermediate damping property between a damping property of the damper 21 and a damping property of the rubber 22 is arranged to an overall outer surface of the damper 21 made of the twin crystal type damping alloy member 1 having a flake shape with a U-shaped longitudinal cross section as shown in Fig. 3a. As a material having an intermediate damping property between a damping property of the damper 21 and a damping property of the rubber 22, consisting of the intermediate layer 31, use is made of polyamide, polyacetal, polycarbonate, polyphenylene ether, polybutadiene terephthalate, polyphenylene sulfide, amorphous polymer and so on. A plurality of dampers 32 are randomly mixed and compounded in the rubber 22, so that the main member 12 of the rubber vibration isolator is constructed as shown in Fig. 4b. In this example, since, in addition to an effect of obtaining a high damping performance based on the main member 12 of the rubber vibration isolator shown in Figs. 3a and 3b, the intermediate layer 31 carries out a function as a gradient material, it is possible to obtain a higher damping performance than that of the example shown in Figs. 3a and 3b.

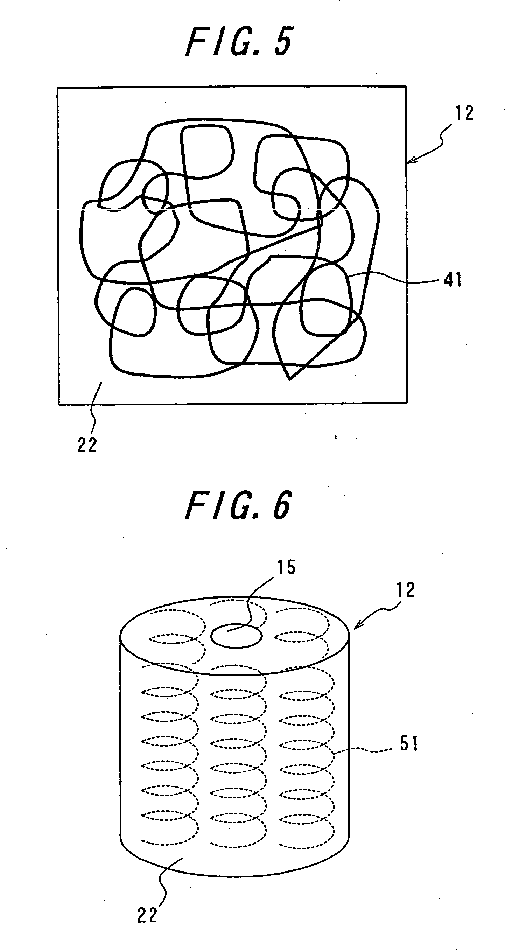

Fig. 5 is a schematic view explaining still another example of a main portion of the rubber vibration isolator using the damping alloy member according to the invention. In this example, use is made of a damper 41 having a structure such that a wire made of the twin crystal type damping alloy member 1 is entangled. The damper 41 is mixed and compounded in the rubber 22, so that the main member 12 of the rubber absorbing isolator is constructed as shown in Fig. 5. Also in this example, it is possible to obtain the same high damping performance as that based on the main member 12 of the rubber absorbing isolator shown in Figs. 3a and 3b.

Fig. 6 is a schematic view explaining still another example of a main portion of the rubber vibration isolator using the damping alloy member according to the invention. In this example, use is made of a spring made of the twin crystal type damping alloy member 1 as a damper 51. A plurality of dampers 51 are mixed and compounded in the rubber 22 in such a manner that they are aligned in the same direction with each other (in Fig. 6, a direction along the through hole 15), so that the main member 12 of the rubber absorbing isolator is constructed as shown in Fig. 6. In this example, since, in addition to an effect of a high damping performance based on the main member 12 of the rubber vibration isolator shown in Figs. 3a and 3b, a most elastically deformed direction of the damper 51 (here, a direction penetrated through a winding wire of the spring consisting of the damper 51) is made to be same as a deformation direction of the rubber vibration isolator 11 (here, a direction along the through hole 15), it is possible to obtain a further high damping performance.

### <As to the floor vibration damping apparatus>

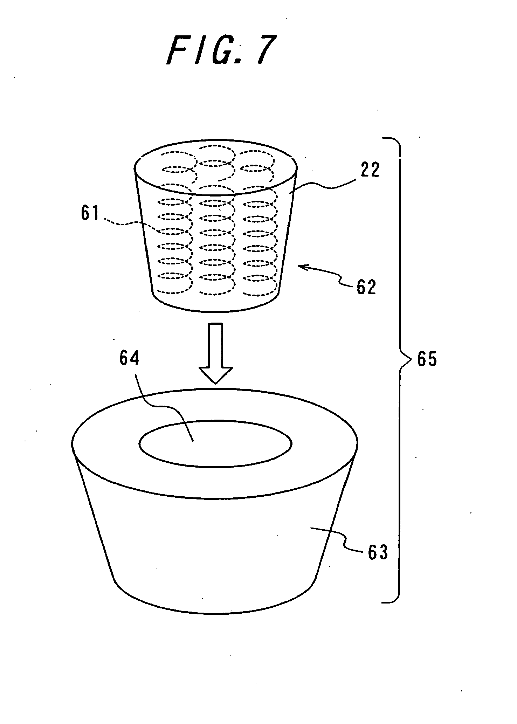

Fig. 7 is a schematic view explaining one example of a vibration damping member of a floor vibration damping apparatus using the damping alloy member according to the invention. In the example shown in Fig. 7, a compound member 62, in which a plurality of springs 61 made of the damping alloy member 1 of the twin crystal type are mixed and compounded in the rubber 22 in such a manner that they are aligned in the same direction, is inserted into a through hole 64 of a rubber main member 63 so as to form an integral body, so that a vibration damping member 65 is obtained.

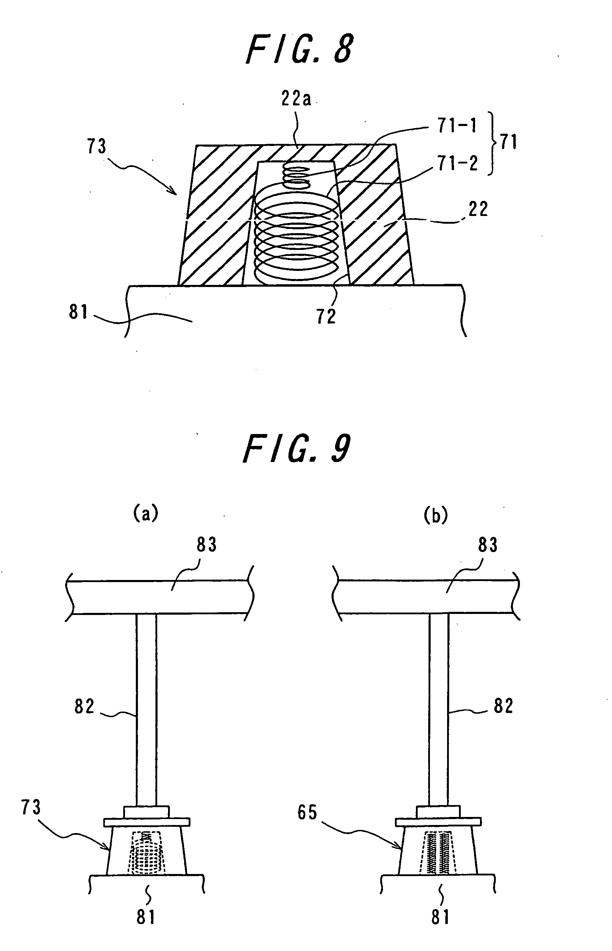

Fig. 8 is a schematic view explaining another example of the vibration damping member of the floor vibration damping apparatus using the damping alloy member according to the invention. In the example shown in Fig. 8, a spring 71 made of the damping alloy member 1 of the twin crystal type is arranged in a hollow portion 72 of the rubber 22, so that a vibration damping member 73 is obtained.
In this case, the spring 71 has a spring structure such that a plurality of springs, i.e. here two springs 71-1 and 71-2 having different spring constants in a height direction, are combined and used in such a manner that: a vibration under a low loading state is absorbed by the spring 71-1 having a low spring constant; and a vibration under a high loading state is absorbed by the spring 71-2 having a high spring constant, while the spring 71-1 having a low spring constant is contacted to a cap 22a.

Figs. 9a and 9b are schematic views respectively explaining one example in which the floor vibration damping apparatus is constructed by using the vibration damping members 65 and 73 respectively shown in Figs. 7 and 8. As shown in Figs. 9a and 9b, a floor member 83 is supported with respect to a base member 81 by means of the vibration damping members 65 and 73 and a column member 82, so that the floor vibration damping apparatus is obtained. In this example, it is possible to reduce vibration and noise on the floor member 83 by means of the floor vibration damping apparatus using the damping alloy member 1 according to the invention.

### <As to the tire>

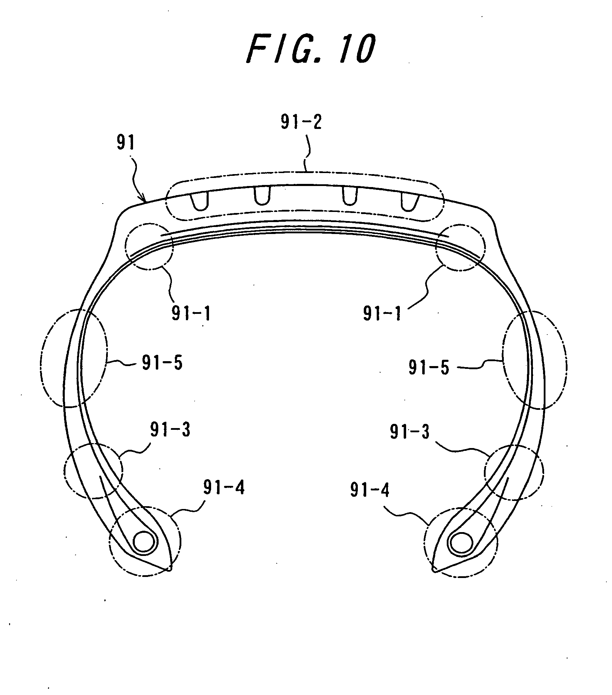

Fig. 10 is a schematic view explaining one example of a tire using the damping alloy member according to the invention. In this example, the damping alloy member 1 having a flake shape with a U-shaped longitudinal cross section shown in Fig. 3a as the damper 21 is embedded in one or more rubber portions such as a shoulder portion 91-1, a tread portion 91-2, a ply-end 91-3, a bead portion 91-4 and a sidewall portion 91-5 of a tire 91, so that the tire 91, which can reduce an impact applied to the tire from a road surface during a moving and can decrease vibration and noise, is obtained. Particularly, in the case such that the damping alloy member 1 is embedded in the sidewall portion 91-5, a damping effect due to a generation of a loss in cornering is expected

As the shape of the damping alloy member 1 in this example, other than the shapes mentioned above, it is possible to form a gradient structure, in which the intermediate member 31 having an intermediate hardness between the matrix rubber 22 and the damping alloy member 1 is coated to the damper 21 made of the damping alloy member 1 having a flake shape with a U-shaped longitudinal cross section as shown in Fig. 4a, so that a rubber deformation can easily be transferred to the damping alloy member 1. Moreover, by utilizing a high thermal conductivity of the damping alloy member 1, exothermic heat in the tire is transferred to an ambient portion, so that a temperature increasing and inhibiting function can be applied to the tire 91.

### <As to the steel cord>

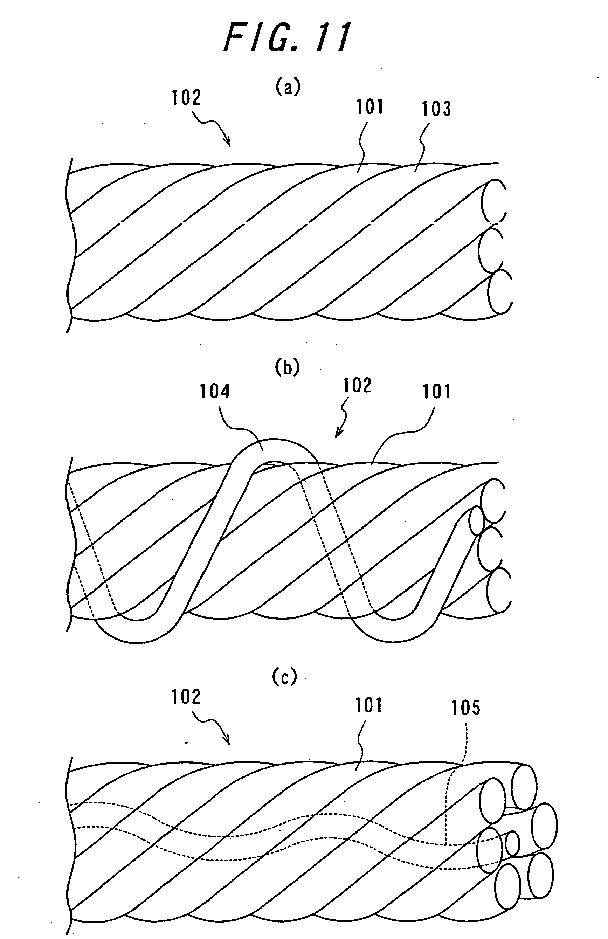

Figs. 11a - 11c are schematic views respectively explaining examples of a steel cord using the damping alloy member according to the invention. In the examples shown in Figs. 11a - 11c, a wire made of the damping alloy member 1 of the twin crystal type is inserted into an inner portion and an outer portion of respective steel wires 101, so that a steel cord 102 is obtained. In the example shown in Fig. 11a, a wire 103 made of the damping alloy member 1 is twisted simultaneously with respective steel wires 101, so that the steel cord 102, in which the wire 103 is arranged at an inner portion, is obtained. On the other hand, in the example shown in Fig. 11b, a wire 104, in which a wire made of the damping alloy member 1 is crimped, is arranged to an outer portion of respective steel wires 101, so that the steel cord 102 is obtained. Further, in the example shown in Fig. 11c, a wire 105, in which the wire made of the damping alloy member 1 is crimped, is arranged at a center portion and respective steel wires 101 are twisted around the crimped steel wire 105, so that the steel cord 102 is obtained.

A tire having the structure such that the steel cord having the construction mentioned above is arranged to an outer layer or the center portion of the tire, or a tire having the structure such that the steel cord having the construction mentioned above is arranged to one of or both of a breaker portion and a carcass portion of the tire, can reduce a vibration and a noise by means of the damping alloy member 1 according to the invention, when the steel cord 102 is deformed by an impact applied to the tire from a road surface during moving.

### <As to the quake-absorbing rubber>

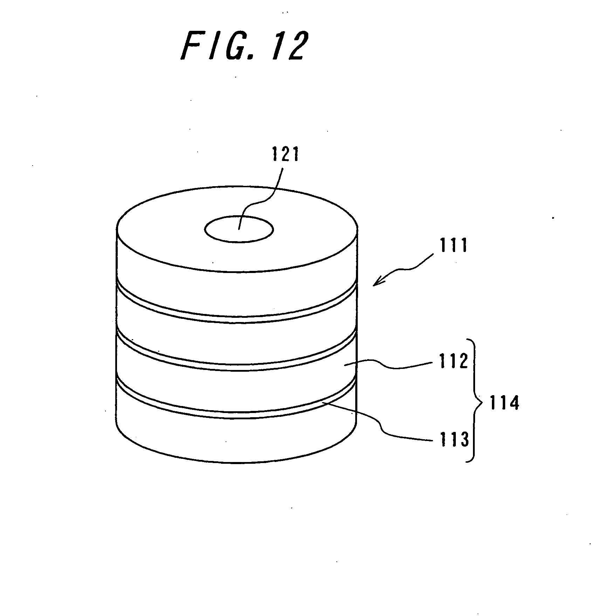

Fig. 12 is a schematic view showing one embodiment of a first aspect of a quake-absorbing rubber using the damping alloy member according to the invention. In the example shown in Fig. 12, a quake-absorbing rubber 111 comprises a laminated rubber 114 having an integral structure obtained by laminating alternately a high damping rubber sheet 112 and a metal plate 113, and a damper member 121 arranged at a center portion of the laminated rubber 114. Here, the laminated rubber 114 has the same structure as that of the conventional laminated rubber.

Features of the quake-absorbing rubber III of the invention are that the damper member 121 is combined with the laminated rubber 114 and that a structure of the damper member 121 specifically such that the damper member 121 is constructed by compounding the damper made of the damping alloy member 1 of the twin crystal type and the normal rubber. Hereinafter, the quake-absorbing rubber 111 according to the invention will be explained in further detail.

In the quake-absorbing rubber III according to the invention, as the damping alloy member 1 of the twin crystal type consisting of the damper included in the damper member 121, any materials known as the damping alloys of the twin crystal type can be used as mentioned above. Particularly, it is preferred to use Cu-Al-Mn alloy, Mg-Zr alloy, Mn-Cu alloy, Mn-Cu-Ni-Fe alloy, Cu-Al-Ni alloy, Ti-Ni alloy, Al-Zn alloy, Cu-Zn-A1 alloy, or Mg alloy, and it is most preferred to use Cu-Al-Mn alloy. In this case, the reason for using the damping alloy of a twin crystal type is as follows. That is to say, a martensite twin crystal structure according to this embodiment is easily deformed by an external input, and, at that time, an energy loss due to hysteresis is generated. This is because the martensite twin crystal is not broken by fatigue, since it is not a material in which a dislocation is not generated by plastic deformation, and only a positional relation of atoms are changed.

Moreover, in the quake-absorbing rubber 111 according to the invention, as a shape of the damper included in the main member 121, it is preferred to use a flake shape, since the shape of the damping alloy can be optimized. Here, the reason for preferably using the flake shape is that a damping effect of the damper can be easily obtained.

Further, in the quake-absorbing rubber 111 according to the invention, as a rubber material consisting of a main construction member of the damper member 121, it is possible to use any rubber used for conventional rubber vibration isolators. Specifically, as one example, it is preferred to use a natural rubber, a styrene rubber, a nitrile rubber, a chloroprene rubber and a butyl rubber.

Furthermore, in the quake-absorbing rubber 111 according to the invention, a compounding rate between the damper and the rubber is not particularly limited. The compounding rate can be determined suitably so as to obtain most suitable damping properties as the quake-absorbing rubber 111 having the damper member 121 in which the damper and the rubber are compounded. Normally, it is preferred to set the compounding rate such as damper: 1 - 50 vol % and rubber: remainder. Here, if an amount of the damper is less than 1 vol %, a contribution rate of the alloy is small. On the other hand, if an amount of the damper exceeds 50 vol %, a mixing resistance during the manufacturing becomes too large and thus the manufacturing may not be possible.

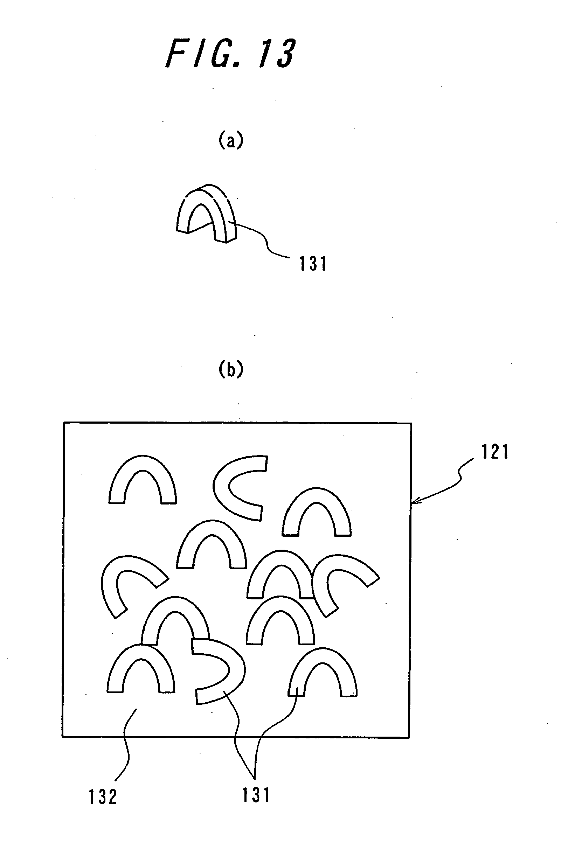

Figs. 13a and 13b are schematic views respectively explaining one example of a damper member of the first aspect of the quake-absorbing rubber using the damping alloy member according to the invention. In this example, use is made of a damper 131 made of the twin crystal type damping alloy member 1 and having a flake shape with a U-shaped longitudinal cross section as shown in Fig. 13a.
A plurality of dampers 131 are randomly mixed and compounded in a rubber 132, so that the damper member 121 is constructed as shown in Fig. 13b. In this example, since, in addition to a damping performance based on an elastic deformation of the rubber 132, a damping performance is based on a deformation of twin crystal of the damper 131 made of the damping alloy member 1 of the twin crystal type, it is possible to obtain a high damping performance as compared with a quake-absorbing rubber made of conventional laminated rubber only.

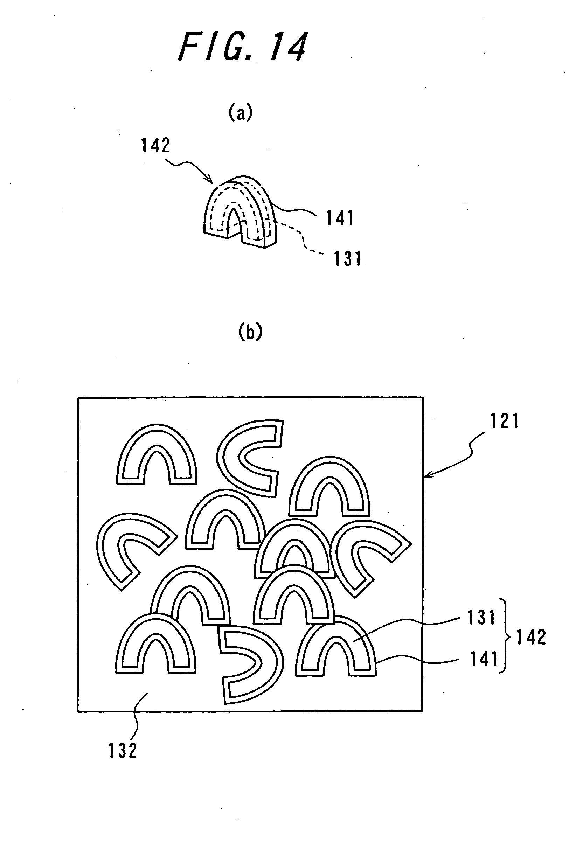

Figs. 14a and 14b are schematic views respectively explaining one example of a damper member of the first aspect of the quake-absorbing rubber using the damping alloy member according to the invention. In this example, use is made of a damper 142 having a structure such that an intermediate layer 141 made of a material having an intermediate damping property between a damping property of the damper 131 and a damping property of the rubber 132 is arranged to an overall outer surface of the damper 131 made of the twin crystal type damping alloy member 1 having a flake shape with a U-shaped longitudinal cross section as shown in Fig. 14a. As a material having an intermediate damping property between a damping property of the damper 131 and a damping property of the rubber 132, consisting of the intermediate layer 141, use is made of polyamide, polyacetal, polycarbonate, polyphenylene ether, polybutadiene terephthalate, polyphenylene sulfide, amorphous polymer and so on. A plurality of dampers 142 are randomly mixed and compounded in the rubber 132, so that the damper member 121 is constructed as shown in Fig. 14b. In this example, since, in addition to an effect of obtaining a high damping performance based on the damper member 121 shown in Figs. 14a and 14b, the intermediate layer 141 carries out a function as a gradient material, it is possible to obtain a higher damping performance than that of the example shown in Figs. 14a and 14b.

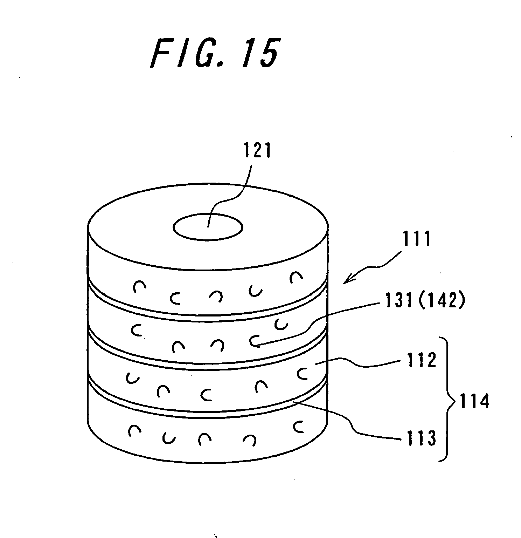

Fig. 15 is a schematic view showing another embodiment of the first aspect of the quake-absorbing rubber using the damping alloy member according to the invention. In the example shown in Fig. 15, the damper member 121 is arranged at a center portion of the laminated rubber 114, and the dampers 131(142) are mixed in the high damping rubber sheet 112 of the laminated rubber 114. In this example, an effect of the dampers 131(142) can be remarkably improved.

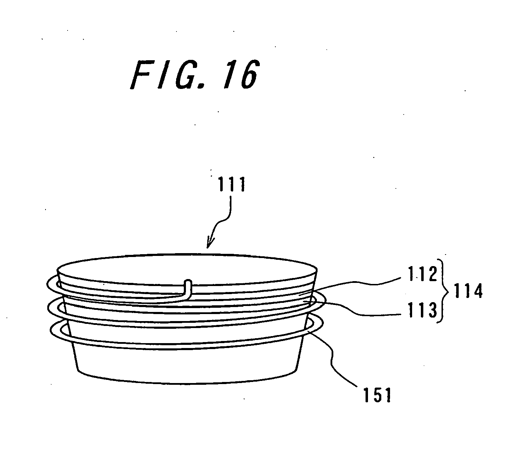

Fig. 16 is a schematic view showing one embodiment of a second aspect of the quake-absorbing rubber using the damping alloy member according to the invention. In the example shown in Fig. 16, the quake-absorbing rubber 111 is constructed in such a manner that a damper 151 having a spring shape made of the damping alloy member 1 of the twin crystal type is wound around an outer portion of the laminated rubber 114 having an integral structure obtained by laminating alternately the high damping rubber sheet 112 and the metal plate 113, and the laminated rubber 114 and the damper 151 are combined with each other. In the preferred example of this embodiment, a periphery of the damper 151 having a spring shape is covered with an elastic member such as rubber and so on, so that the damper 151 having a spring shape can be protected. Moreover, as the damping alloy member 1 of the twin crystal type consisting of the damper 151, use is made of the same materials as those of the damping alloy member 1 of the twin crystal type consisting of the damper in the quake-absorbing rubber 111 according to the first aspect mentioned above.

The quake-absorbing rubber 111 according to the second aspect having the construction mentioned above can be manufactured by producing preliminarily the laminated rubber 114 and winding the damper 151 having a spring shape and made of the damping alloy member 1 of the twin crystal type around the laminated rubber. Moreover, the quake-absorbing rubber 111 according to the second aspect having the construction mentioned above can be also manufactured by producing preliminarily the laminated rubber 114 using a non-cured rubber, winding the damper 151 having a spring shape and made of the damping alloy of the twin crystal type around the laminated rubber 114 and curing it finally.

The damping alloy member according to the invention can reduce a vibration and a noise from a viewpoint of the shape, in addition to a damping property of the alloy, and thus it is preferably used for: the damping alloy member having a function of reducing a high vibration and noise; and the rubber damping isolator, the floor vibration damping apparatus, the tire and the steel cord, which utilize the damping alloy member. Moreover, the quake-absorbing rubber made of the damping alloy member according to the invention can absorb energy during an earthquake as is the same as the conventional quake-absorbing rubber, and thus it is preferably used for construction members of quake-absorbing apparatus for architecture / bridge construction, which further requires a rapid ceasing of the vibration during an earthquake.

## Claims

1. A damping alloy member (1) which consists of a twin crystal type damping alloy made of Cu-Al-Mn alloy, Mg-Zr alloy, Mn-Cu alloy, Mn-Cu-Ni-Fe alloy, Cu-Al-Ni alloy, Ti-Ni alloy, Al-Zn alloy, Cu-Zn-Al alloy, Mg alloy, Cu-Si alloy, Fe-Mn-Si alloy, Fe-Ni-Co-Ti alloy, Fe-Ni-C alloy, Fe-Cr-Ni-Mn-Si-Co alloy and Ni-Al alloy, and has a shape of a flake, a wire or a spring for optimizing a deformation of the alloy.

2. A rubber vibration isolator (11) wherein a rubber (22) and a damper (21) made of a damping alloy member (1) according to claim 1 are compounded.

3. A rubber vibration isolator according to claim 2, wherein an elastically deformed direction of the damper is made to be same as a deformation direction of the rubber vibration isolator.

4. A floor vibration damping apparatus which consists of a composite material in which a rubber (22) and a damping alloy member (1) according to claim 1 are compounded.

5. A floor vibration damping apparatus according to claim 4, wherein the damping alloy member has a spring structure such that a plurality of springs (71), having different spring constants in a height direction, are combined.

6. A tire (91) wherein a damping alloy member (1) according to claim 1 is embedded in the tire so as to reduce an impact applied to a moving tire from a road surface and to decrease vibration and noise.

7. A tire according to claim 6, wherein a damping alloy member having a flake shape is used.

8. A steel cord (102) wherein a damping alloy member (1) according to claim 1 is inserted into an inner portion and an outer portion of the steel cord.

9. A steel cord according to claim 8, wherein a damping alloy member having a wire shape or a crimped wire shape is used, so that a deformation of the steel cord is easily transferred to the damping alloy member.

10. A tire consisting of a steel cord (102) according to claim 8 or 9, wherein, in the case such that the steel cord is deformed by an impact applied to a moving tire from a road surface, vibration and noise are reduced by the damping alloy member.

11. A quake-absorbing rubber (111) wherein a damper member (121), in which a rubber and a damper made of a damping alloy member (1) according to claim 1 are compounded, is combined with a laminated rubber (114) having an integral structure obtained by laminating alternately a high damping rubber sheet (112) and a metal plate (113).

12. A quake-absorbing rubber according to claim 11, wherein the damper member (121) is arranged at a center portion of the laminated rubber (114).

13. A quake-absorbing rubber according to claim 11 or 12, wherein the damper has a flake shape.

14. A quake-absorbing rubber according to any of claims 11 to 13, wherein the damper is mixed in the high damping rubber sheet (112) of the laminated rubber (114).

15. A quake-absorbing rubber according to any of claims 11 to 14, wherein use is made of a damper (142) having a structure such that an intermediate layer (141) made of a material having an intermediate damping property between a damping property of the damper (131) and a damping property of the rubber (132) is arranged to an overall outer surface of the damper.

16. A quake-absorbing rubber (111) wherein a damper (151) having a spring shape made of a damping alloy member (1) according to claim 1 is wound around an outer portion of a laminated rubber (114) having an integral structure obtained by laminating alternately a high damping rubber sheet (112) and a metal plate (113), and the laminated rubber (114) and the damper (151) are combined with each other.

17. A quake-absorbing rubber according to claim 16, wherein a periphery of the damper (151) having a spring shape is covered with an elastic member.

## Patentansprüche

1. Dämpfungslegierungselement (1), das aus einer Zwillingskristalldämpfungslegierung besteht, hergestellt aus: Cu-Al-Mn-Legierung; Mg-Zr-Legierung; Mn-Cu-Legierung; Mn-Cu-Ni-Fe-Legierung; Cu-Al-Ni-Legierung; Ti-Ni-Legierung; Al-Zn-Legierung; Cu-Zn-Al-Legierung; Mg-Legierung; Cu-Si-Legierung; Fe-Mn-Si-Legierung; Fe-Ni-Co-Ti-Legierung; Fe-Ni-C-Legierung; Fe-Cr-Ni-Mn-Si-Co-Legierung; und Ni-Al-Legierung; und das eine Form einer Flocke, eines Drahtes oder einer Feder für das Optimieren einer Verformung der Legierung aufweist.

2. Gummivibrationsisolator (11), bei dem ein Gummi (22) und ein Dämpfungsmittel (21), hergestellt aus einem Dämpfungslegierungselement (1) nach Anspruch 1, kompoundiert werden.

3. Gummivibrationsisolator nach Anspruch 2, bei dem veranlasst wird, dass eine elastisch verformte Richtung des Dämpfungsmittels die gleiche ist wie die Verformungsrichtung des Gummivibrationsisolators.

4. Bodenvibrationsdämpfer, der aus einem Verbundwerkstoff besteht, bei dem ein Gummi (22) und ein Dämpfungslegierungselement (1) nach Anspruch 1 kompoundiert werden.

5. Bodenvibrationsdämpfer nach Anspruch 4, bei dem das Dämpfungslegierungselement eine Federstruktur aufweist, so dass eine Vielzahl von Federn (71) mit unterschiedlichen Federkonstanten in einer Höhenrichtung kombiniert werden.

6. Reifen (91), bei dem ein Dämpfungslegierungselement (1) nach Anspruch 1 im Reifen so eingebettet ist, dass ein Stoß verringert wird, der auf einen sich bewegenden Reifen von einer Straßenoberfläche ausgeübt wird, und dass eine Vibration und ein Geräusch vermindert werden

7. Reifen nach Anspruch 6, bei dem ein Dämpfungslegierungselement eingesetzt wird, das eine Flockenform aufweist.

8. Stahlkord (102), bei dem ein Dämpfungslegierungselement (1) nach Anspruch 1 in einen inneren Abschnitt und einen äußeren Abschnitt des Stahlkordes eingesetzt wird.

9. Stahlkord nach Anspruch 8, bei dem ein Dämpfungslegierungselement mit einer Drahtform oder einer Form eines gequetschten Drahtes verwendet wird, so dass eine Verformung des Stahlkordes leicht auf das Dämpfungslegierungselement übertragen wird.

10. Reifen, der aus einem Stahlkord (102) nach Anspruch 8 oder 9 besteht, bei dem in dem Fall, dass der Stahlkord durch einen Stoß verformt wird, der auf einen sich bewegenden Reifen von einer Straßenoberfläche ausgeübt wird, die Vibration und das Geräusch durch das Dämpfungslegierungselement verringert werden.

11. Erdbebenabsorbierender Gummi (111), bei dem ein Dämpfungselement (121), bei dem ein Gummi und ein aus einem Dämpfungslegierungselement (1) nach Anspruch 1 hergestelltes Dämpfungsmittel kompoundiert werden, mit einem laminierten Gummi (114) mit einer integrierten Struktur kombiniert wird, die durch abwechselndes Laminieren einer stark dämpfenden Gummiplatte (112) und einer Metallplatte (113) erhalten wird.

12. Erdbebenabsorbierender Gummi nach Anspruch 11, bei dem das Dämpfungselement (121) in einem mittleren Abschnitt des laminierten Gummis (114) angeordnet ist.

13. Erdbebenabsorbierender Gummi nach Anspruch 11 oder 12, bei dem das Dämpfungsmittel eine Flockenform aufweist.

14. Erdbebenabsorbierender Gummi nach einem der Ansprüche 11 bis 13, bei dem das Dämpfungsmittel in die stark dämpfende Gummiplatte (112) des laminierten Gummis (114) eingemischt ist.

15. Erdbebenabsorbierender Gummi nach einem der Ansprüche 11 bis 14, bei dem ein Dämpfungsmittel (142) mit einer derartigen Struktur benutzt wird, dass eine Zwischenschicht (141), die aus einem Material mit einer dazwischenliegenden Dämpfungseigenschaft zwischen einer Dämpfungseigenschaft des Dämpfungsmittels (131) und einer Dämpfungseigenschaft des Gummis (132) hergestellt wird, auf einer gesamten Außenfläche des Dämpfungsmittels angeordnet ist.

16. Erdbebenabsorbierender Gummi (111), bei dem ein Dämpfungsmittel (151), das eine Federform aufweist, hergestellt aus einem Dämpfungslegierungselement (1) nach Anspruch 1, um einen äußeren Abschnitt eines laminierten Gummis (114) gewickelt wird, der eine integrierte Struktur aufweist, erhalten durch abwechselndes Laminieren einer stark dämpfenden Gummiplatte (112) und einer Metallplatte (113), und bei dem der laminierte Gummi (114) und das Dämpfungsmittel (151) miteinander kombiniert werden.

17. Erdbebenabsorbierender Gummi nach Anspruch 16, bei dem ein Umfang des Dämpfungsmittels (151), das eine Federform aufweiset, mit einem elastischen Element bedeckt ist.

## Revendications

1. Elément d'alliage amortisseur (1) composé d'un alliage amortisseur du type cristal maclé produit à partir d'un alliage de Cu-Al-Mn, un alliage de Mg-Zr, un alliage de Mn-Cu, un alliage de Mn-Cu-Ni-Fe, un alliage de Cu-Al-Ni ; un alliage de Ti-Ni, un alliage de Al-Zn, un alliage de Cu-Zn-Al, un alliage de Mg, un alliage de Cu-Si, une alliage de Fe-Mn-Si, un alliage de Fe-Ni-Co-Ti, un alliage de Fe-Ni-C, un alliage de Fe-Cr-Ni-Mn-Si-Co et un alliage de Ni-Al et ayant la forme d'une paillette, d'un câble ou d'un ressort, pour optimiser une déformation de l'alliage.

2. Isolateur de vibrations en caoutchouc (11), dans lequel un caoutchouc (22) et un amortisseur (21) composé d'un élément d'alliage amortisseur (1) selon la revendication 1 sont mélangés.

3. Isolateur de vibrations en caoutchouc selon la revendication 2, dans lequel une direction de déformation élastique de l'amortisseur est identique à une direction de déformation de l'isolateur de vibrations en caoutchouc.

4. Dispositif amortisseur des vibrations du sol, comprenant un matériau composite dans lequel un caoutchouc (22) et un élément d'alliage amortisseur (1) selon la revendication 1 sont mélangés.

5. Dispositif amortisseur de vibrations du sol selon la revendication 4, dans lequel l'élément d'alliage amortisseur a une structure de ressort, de sorte que plusieurs ressorts (71), présentant différentes constantes d'élasticité, sont combinés.

6. Bandage pneumatique (91), dans lequel un élément d'alliage amortisseur (1) selon la revendication 1 est noyé dans le bandage pneumatique, de sorte à réduire un impact appliqué à un bandage pneumatique en roulement par la surface d'une route et en vue de réduire les vibrations et le bruit.

7. Bandage pneumatique selon la revendication 6, utilisant un élément d'alliage amortisseur en forme de paillette.

8. Câblé en acier (102), dans lequel un élément d'alliage amortisseur (1) selon la revendication 1 est inséré dans une partie interne et dans une partie externe du câblé en acier.

9. Câblé en acier selon la revendication 8, utilisant un élément d'alliage amortisseur ayant une forme en câblé ou une forme en câblé serti, de sorte que la déformation du câblé en acier est aisément transférée vers l'élément d'alliage amortisseur.

10. Bandage pneumatique constitué d'un câblé en acier (102) selon les revendications 8 ou 9, dans lequel, lors d'une déformation de ce câblé en acier par un impact appliqué à un bandage pneumatique en roulement par la surface d'une route, les vibrations et le bruit sont réduits par l'élément d'alliage amortisseur.

11. Caoutchouc à absorption sismique (111), dans lequel un élément amortisseur (121), dans lequel sont mélangés un caoutchouc et un amortisseur produit à partir d'un élément d'alliage amortisseur (1) selon la revendication 1, est combiné avec un caoutchouc stratifié (114) ayant une structure d'une seule pièce obtenue par stratification alternée d'une feuille de caoutchouc à amortissement élevé (112) et d'une plaque métallique (113).

12. Caoutchouc à absorption sismique selon la revendication 11, dans lequel l'élément amortisseur (121) est agencé au niveau d'une partie centrale du caoutchouc stratifié (114).

13. Caoutchouc à absorption sismique selon les revendications 11 ou 12, dans lequel l'amortisseur a une forme en paillette.

14. Caoutchouc à absorption sismique selon l'une quelconque des revendications 11 à 13, dans lequel l'amortisseur est mélangé dans la feuille de caoutchouc à amortissement élevé (112) du caoutchouc stratifié (114).

15. Caoutchouc à absorption sismique selon l'une quelconque des revendications 11 à 14, utilisant un amortisseur (142) ayant une structure telle qu'une couche intermédiaire (141), produite à partir d'un matériau présentant une propriété d'amortissement intermédiaire entre une propriété d'amortissement de l'amortisseur (131) et une propriété d'amortissement du caoutchouc (132), est agencée sur une surface externe globale de l'amortisseur.

16. Caoutchouc à amortissement sismique (111), dans lequel un amortisseur (151) ayant une forme en ressort, produit à partir d'un élément d'alliage amortisseur (1) selon la revendication 1, est enroulé autour d'une partie externe d'un caoutchouc stratifié (114) ayant une structure d'une seule pièce obtenue par stratification alternée d'une feuille de caoutchouc à amortissement élevé (112) et d'une plaque métallique (113), le caoutchouc stratifié (114) et l'amortisseur (151) étant combinés l'un avec l'autre.

17. Caoutchouc à amortissement sismique selon la revendication 16, dans lequel une périphérie de l'amortisseur (151) ayant une forme en ressort est recouverte d'un élément élastique.
